# EUROPÄISCHE PATENTSCHRIFT

(11) **EP 3 504 455 B1**
(45) Veröffentlichungstag und Bekanntmachung des Hinweises auf die Patenterteilung: **20.12.2023**
(21) Anmeldenummer: 17735517.9
(22) Anmeldetag: 05.07.2017
(51) Int. Cl.: F16D 48/02, F16D 33/10

(54) **HYDRODYNAMISCHE KUPPLUNG**
HYDRODYNAMIC COUPLING
ACCOUPLEMENT HYDROCINÉTIQUE

(30) Priorität: 23.08.2016 DE 102016215739
(43) Veröffentlichungstag der Anmeldung: 03.07.2019
(73) Patentinhaber: Voith Patent GmbH, 89522 Heidenheim (DE)
(72) Erfinder: LEIDIG, Markus, 74564 Crailsheim (DE); SCHMITT, Holger, 97078 Würzburg (DE); JOHE, Steffen, 74405 Gaildorf (DE)
(74) Vertreter: Voith Patent GmbH - Patentabteilung
(86) Internationale Anmeldenummer: PCT/EP2017/066742
(87) Internationale Veröffentlichungsnummer: WO 2018/036705

(56) Entgegenhaltungen:
- DE-A1- 4 342 103
- DE-A1- 10 327 154
- GB-A- 675 333
- US-A- 3 751 923
- US-A1- 2007 006 826

## Beschreibung

Die Erfindung betrifft eine hydrodynamische Kupplung, auch Strömungskupplung oder Turbokupplung genannt. Insbesondere betrifft die Erfindung eine füllungsgesteuerte hydrodynamische Kupplung mit Direktumlauf.

Eine hydrodynamische Kupplung ist dazu eingerichtet, ein Drehmoment zwischen einer Eingangsseite und einer Ausgangsseite zu übermitteln. Die Eingangsseite ist mit einem Pumpenrad und die Ausgangsseite mit einem Turbinenrad verbunden, die einen Arbeitsraum begrenzen. Wird der Arbeitsraum mit einem Fluid angefüllt, so entsteht eine hydromechanische Kopplung zwischen den Drehbewegungen der Eingangsseite und der Ausgangsseite. Bei einer füllungsgesteuerten Kupplung kann der Grad der Kopplung durch die Menge von Fluid beeinflusst werden, die im Arbeitsraum vorliegt. Üblicherweise ist eine Füllpumpe vorgesehen, um Fluid in den Arbeitsraum zu fördern. Ein Teil des geförderten Fluids wird abgezweigt und an Schmierstellen geführt, insbesondere an Wälzlager, mit denen das Pumpenrad oder das Turbinenrad gelagert sind. Häufig ist ein Direktumlauf vorgesehen, der einen hydraulischen Auslass mit einem hydraulischen Einlass des Arbeitsraums verbindet. Der Auslass ist üblicherweise radial außen am Pumpenrad vorgesehen, sodass Fluid unter dem Einfluss von Fliehkraft nach dem Prinzip einer Staudruckpumpe durch den Auslass befördert wird. Der Einlass ist bevorzugt radial weiter innen vorgesehen, um das nötige Druckgefälle für eine Zirkulation des Fluids sicherzustellen. Häufig ist ein Wärmetauscher im Direktumlauf vorgesehen, um das zirkulierte Fluid zu kühlen.

Bei einem halboffenen Direktumlauf weist der Arbeitsraum einen weiteren, permanent geöffneten Auslass für Fluid auf, durch den im Betrieb der Kupplung Fluid strömt. Das ausströmende Fluid und das von den Schmierstellen abtropfende Fluid werden in einem Tank gesammelt, aus dem die Füllpumpe gespeist wird. Die Füllpumpe muss immer in Betrieb sein, da ein Anteil der Fördermenge zur Versorgung der Schmierstellen mit Fluid und beim halboffenen Kreislauf zur Vollhaltung des Arbeitsraums benötigt wird. Die nicht benötigte Fördermenge wird üblicherweise mittels eines Bypassventils in den Tank zurückgefördert. Zum Entleeren der hydrodynamischen Kupplung ist häufig ein steuerbares Entleerventil am Arbeitsraum vorgesehen. Das Entleerventil und seine Ansteuerung können jedoch aufwändig sein und eine Verfügbarkeit oder Langlebigkeit der Kupplung verringern.

Die italienische Firma Transfluid hat vorgeschlagen, eine füllungsgesteuerte hydrodynamische Kupplung mit einer Pumpe auszustatten, deren Fördermenge variiert werden kann, um den Arbeitsraum mit Fluid zu füllen. Durch Unterbrechung des Ölflusses in die Kupplung leert sich der Arbeitskreislauf und der Antrieb wird vom Abtrieb getrennt. Diese Trennung kann durch ein Schnellentleerventil beschleunigt werden. Diese Lösung sieht eine separate Schmierölpumpe zur Versorgung der Schmierstellen mit Fluid vor. Um das Antriebsmoment oder die Drehzahl einer Pumpe zu steuern kann ein Frequenzumrichtermotor mit der Bezeichnung Danfoss VLT Drive Motor FCM 106 verwendet werden.

Aus der DE103 15 402 und der korrespondierenden US 2007/0006826 A1 ist ein Antriebsstrang mit einem Verbrennungsmotors und einem Kühlkreislauf bekannt. Der Kühlkreislauf umfasst einen Lüfter, der über eine hydrodynamische Kupplung zur Drehzahlsteuerung, mit der Kurbelwelle des Verbrennungsmotors verbunden ist. Zum Betrieb der hydrodynamischen Kupplung wird Kühlmittel über einen Bypass der hydrodynamischen Kupplung zugeführt.

Aus der GB 675,333 ist eine hydrodynamische Kupplung bekannt. Dem Arbeitsraum der Kupplung wird mittels einer Pumpe gekühlte Arbeitsflüssigkeit zugeführt. Zur Einstellung der Leistungsübertragung ist eine einstellbare Ventilanordnung vorgesehen, die eine erste Ventilplatte und eine zweite Ventilplatte umfasst. Durch Justierung der beiden Ventilplatten zueinander sind Abflussöffnungen zur Einstellung des Abflusses von Hydraulikflüssigkeit einstellbar. Es ist vorgesehen, dass die Arbeitsflüssigkeit bei allen Betriebszuständen zirkuliert.

Aus der US 3,751,923 ist eine hydrodynamische Kupplung bekannt. Bei dieser hydrodynamischen Kupplung kann der Arbeitsraum der Kupplung mittels einer Pumpe mit Arbeitsmedium gefüllt werden. Durch die Füllung des Arbeitsraumes kann das übertragbare Drehmoment kontrolliert werden. Die Zuführung von Arbeitsmedium wird mittels eines mit einem Fußpedal verbunden Ventils unterbunden, wenn die Kupplung entleert wird.

Aus der DE 10327154 A1 ist ein Verfahren zur Schmiermittelversorgung einer hydrodynamischen Kupplung bekannt, wobei die Schmiermittelversorgung über einen Direktumlauf erfolgt.

Weiterhin ist im Stand der Technik die DE 43 42 103 A1 bekannt, bei der eine geregelte Befüllung des Arbeitsraums einer hydrodynamischen Kupplung beschrieben wird.

Eine der vorliegenden Erfindung zugrunde liegende Aufgabe besteht darin, eine Technik anzugeben, um eine füllungsgesteuerte hydrodynamische Kupplung vereinfacht aufbauen oder betreiben zu können. Die Erfindung löst diese Aufgabe mittels der Gegenstände der unabhängigen Ansprüche. Unteransprüche geben bevorzugte Ausführungsformen wieder.

Eine füllungsgesteuerte hydrodynamische Kupplung umfasst ein Pumpenrad und ein Turbinenrad, die einen Arbeitsraum begrenzen, und die mittels eines hydraulischen Fluids mechanisch miteinander gekoppelt werden können. Ferner umfasst die Kupplung einen Direktumlauf, der einen hydraulischen Auslass mit einem hydraulischen Einlass des Arbeitsraums verbindet, eine Pumpeinrichtung, die hydraulisch zwischen einer Fluidquelle und dem Direktumlauf angeordnet ist, und eine Schmierleitung, die von der Pumpeinrichtung zu einer Schmierstelle der Kupplung führt. Dabei ist die Pumpeinrichtung dazu eingerichtet, in einer ersten Förderrichtung Fluid von der Fluidquelle in den Arbeitsraum und in die Schmierleitung, oder in einer zweiten Förderrichtung vom Arbeitsraum zur Fluidquelle zu fördern.

Vorteilhaft kann die Kupplung mit nur einer Pumpe betrieben werden, eine zusätzliche Schmierölpumpe kann entfallen. Um die Menge des im Arbeitsraum befindlichen Fluids zu verringern, kann die Pumpe in der zweiten Förderrichtung betrieben werden, sodass ein steuerbares Schnellentleerventil am Arbeitsraum nicht erforderlich ist. Zusätzliche Ventile zur Steuerung des Fluidhaushalts der Kupplung können entfallen. Die Kupplung kann dadurch einfacher und betriebssicherer aufgebaut sein.

Es ist weiterhin bevorzugt, dass die Pumpeinrichtung dazu eingerichtet ist, den Betrag des geförderten Volumenstroms zu variieren. Dazu kann insbesondere ein Elektromotor zum Antrieb der Pumpeinrichtung vorgesehen sein und der Elektromotor kann, beispielsweise mittels eines Frequenzumrichters, in Drehrichtung und Drehzahl bzw. Drehmoment gesteuert werden. Zum Füllen des Arbeitsraums mit Fluid kann die Pumpeinrichtung in der ersten Förderrichtung mit einem hohen Volumenstrom betrieben werden. Dazu kann der antreibende Elektromotor auf maximale Leistung angesteuert werden. Umfasst der Antriebsmotor eine elektrische Asynchronmaschine, so kann diese zur Erreichung des hohen Volumenstroms über ihre Nenndrehfrequenz hinaus im Feldschwächbereich betrieben werden. Es kann ein relativ kleiner Elektromotor zum Antreiben der Pumpeinrichtung verwendet werden, wobei ein rasches Fluten des Arbeitsraums mit Fluid trotzdem sichergestellt werden kann.

Befindet sich eine gewünschte Menge Fluid im Arbeitsraum, so kann die Pumpeinrichtung in der ersten Förderrichtung mit einem verringerten Volumenstrom betrieben werden. Dazu wird die Pumpeinrichtung bzw. der Elektromotor so gesteuert, dass gerade so viel Fluid in den Arbeitsraum gefördert wird, wie aus ihm entweicht. Entweicht kein Fluid aus dem Arbeitsraum kann die Pumpe auch ausgestellt werden. Der durch die Pumpeinrichtung fließende Volumenstrom ist dabei bevorzugt um den Betrag höher, der zur Versorgung der Schmierstellen mit Fluid erforderlich ist. Ist ein Betrieb der Pumpe für die Versorgung des Arbeitsraumes nicht erforderlich, so kann die Pumpe für die Versorgung der Schmierstellen betrieben werden. Dafür kann auch ein periodischer Betrieb der Pumpe vorgesehen sein. Die Pumpeinrichtung bzw. der sie antreibende Elektromotor nimmt zur Förderung des niedrigen Volumenstroms üblicherweise eine verringerte elektrische Leistung auf. Im Gegensatz zu einer bekannten Lösung mit einer Pumpeinrichtung, die mit konstantem Volumenstrom und Bypassventil betrieben wird, kann substantiell Energie eingespart werden. Außerdem kann vermieden werden, dass ein großes Fluidvolumen permanent durch die Pumpeinrichtung umgewälzt wird.

Es ist weiterhin bevorzugt, dass ein Tank als Fluidquelle vorgesehen ist, wobei aus dem Arbeitsraum oder von der Schmierstelle austretendes Fluid in den Tank geführt wird. Bei einer füllungsgesteuerten hydrodynamischen Kupplung mit Direktumlauf wird die Größe des Tanks neben dem im Stillstand aufzunehmenden Kreislaufvolumen durch den Fördervolumenstrom der Pumpeinrichtung und die Verweilzeit des Fluids im Tank bestimmt. Für eine vorgegebene Verweilzeit ist das im Tank aufzunehmende Volumen daher stark vom Volumenstrom der Pumpeinrichtung abhängig. Wird die Pumpeinrichtung während des üblichen Betriebs der Kupplung mit einem geringen Volumenstrom betrieben, wie oben beschrieben ist, so kann das Volumen des Tanks gegenüber einer bekannten Lösung substantiell verkleinert sein. Der Tank kann auf das 1,2 fache bis 1,5-fache des Fluidvolumens für eine maximale Füllung reduziert werden. Bei einer 2 Minuten unterschreitenden vorgesehenen Umlaufzeit kann ein Tankvolumen des 1,1-fachen des maximalen Füllvolumens des Arbeitsraumes ausreichend sein. Der verkleinerte Tank kann einfacher an einer vorteilhaften Stelle angeordnet werden. Die Kupplung kann mit dem Tank integriert ausgeführt sein, wobei sie durch das kleinere Gesamtvolumen verbessert auch unter beengten Platzverhältnissen eingesetzt werden kann.

Durch die Möglichkeit eines verringerten Volumenstroms der Pumpeinrichtung im Normalbetrieb der Kupplung können Leitungen oder Ventile der Kupplung kleiner ausgelegt werden oder entfallen, was zu einer Kosteneinsparung führen kann. Ist ein elektrisch steuerbares Ventil im hydraulischen System der Kupplung vorgesehen, so kann ein getakteter Betrieb, um im zeitlichen Mittel eine nur teilweise Öffnung des Ventils zu erzielen, nicht erforderlich sein. Eine Lebensdauer des Ventils kann dadurch erhöht sein oder das Ventil zur Variation des über die Kupplung übertragenen Drehmoments kann entfallen.

Es ist weiterhin bevorzugt, dass der Arbeitsraum einen weiteren, permanent geöffneten Auslass für Fluid umfasst. Dieser Auslass kann insbesondere eine oder mehrere Düsenbohrungen in einem radial äußeren Bereich des Pumpenrads umfassen. Eine derartige Konstruktion wird auch als halboffener Kreislauf bezeichnet. Ein Austausch von Fluid zwischen der Fluidquelle und dem Arbeitsraum kann dadurch erhöht sein, sodass ein Wärmeabtransport verbessert oder eine Belastung des Fluids verringert sein kann. Außerdem kann der Arbeitsraum langsam entleert werden, wenn die Pumpeinrichtung abgestellt wird.

In noch einer weiteren Ausführungsform ist ein steuerbares Ablassventil zum Ablassen von Fluid aus dem Arbeitsraum vorgesehen. Ein solches Ablassventil kann die Lenzwirkung der Pumpeinrichtung unterstützen. Das Ablassventil kann beispielsweise als hydraulisch gesteuertes Membranventil ausgeführt sein.

Es ist weiterhin bevorzugt, dass im Direktumlauf ein Wärmetauscher angeordnet ist, wobei die Pumpeinrichtung hydraulisch zwischen dem Wärmetauscher und dem Einlass des Arbeitsraums am Direktumlauf angeschlossen ist. Bezüglich eines Umlaufssinns des Fluids im Direktumlauf ist die Pumpeinrichtung also stromabwärts des Wärmetauschers angeschlossen. Insbesondere wenn die Kupplung stillsteht, kann die Pumpeinrichtung in der ersten Förderrichtung betrieben werden, um entgegen der üblichen Strömungsrichtung Fluid durch den Wärmetauscher zu fördern. Dadurch kann eine Stillstandskühlung realisiert sein, um das Fluid der Kupplung auch dann zu kühlen, wenn das Pumpenrad der Kupplung stillsteht. Außerdem kann in dieser Konfiguration das oben erwähnte steuerbare Ablassventil entfallen. Außerdem kann der Wärmetauscher mittels der Pumpeinrichtung angewärmt werden, um beispielsweise bei tiefen Außentemperaturen eine Betriebstemperatur des Wärmetauschers schneller oder sanfter zu erreichen.

In noch einer weiteren Ausführungsform ist im Direktumlauf ein Wärmetauscher angeordnet, wobei die Pumpeinrichtung hydraulisch zwischen der Fluidquelle und dem Wärmetauscher am Direktumlauf angeschlossen ist und wobei ein steuerbares Ablassventil am Direktumlauf im Bereich des Einlasses vorgesehen ist. In dieser Ausführungsform kann eine Stillstandskühlung in der üblichen Durchströmungsrichtung des Wärmetauschers gesteuert werden. Die Pumpeinrichtung fördert Fluid in den Wärmetauscher, das von dort unmittelbar wieder abgelassen werden kann, ohne in den Arbeitsraum zu gelangen.

Ein Kupplungssystem umfasst die oben beschriebene Kupplung in einer beliebigen Ausführungsform sowie eine Steuereinrichtung zur Steuerung der Pumpeinrichtung. Die Pumpeinrichtung kann auf unterschiedliche Weisen bezüglich ihrer Förderrichtung und/oder ihres Volumenstroms gesteuert werden. In einer besonders bevorzugten Ausführungsform wird die Pumpeinrichtung mittels eines Elektromotors, insbesondere einer Dreiphasen-Asynchronmaschine, angetrieben und die Steuereinrichtung ist dazu eingerichtet, eine Drehrichtung und/oder Drehzahl des Elektromotors zu steuern. Dazu kann insbesondere eine feldorientierte Steuerung oder feldorientierte Regelung verwendet werden. Die Steuereinrichtung umfasst bevorzugt einen programmierbaren Mikrocomputer oder Mikrocontroller zur Durchführung der Steueraufgabe. Ferner ist bevorzugt, dass die Steuereinrichtung eine Schnittstelle aufweist, über die Steuerungsparameter entgegengenommen werden können.

Es ist weiter bevorzugt, dass an der Kupplung wenigstens ein Sensor, beispielsweise ein Drehzahlsensor oder ein Drehmomentsensor am Turbinenrad, ein Drucksensor oder ein Temperatursensor an einer der hydraulischen Leitungen oder ein anderer oder weiterer Sensor angebracht und mit der Steuereinrichtung verbunden ist. Die Steuereinrichtung kann insbesondere dazu eingerichtet sein, die Kupplung vollständig zu steuern, also beispielsweise in Abhängigkeit einer Anforderung eines zu übertragenden Drehmoments, eines einzuhaltenden Schlupfs oder einer zu erzielenden Drehzahl die gesamte Fluidsteuerung durchzuführen. Beispielsweise können das Füllen des Arbeitsraums in Abhängigkeit vorbestimmter Anfahrcharakteristika und ein Halten des Fluidspiegels im Arbeitsraum oder ein Entleeren des Arbeitsraums nach weiteren vorgegebenen Charakteristika durch die Steuereinrichtung gesteuert werden. Ferner können ein Kühlen des Fluids mittels des optionalen Wärmetauschers oder ein Anwärmen des Wärmetauschers bei sehr niedrigen Außentemperaturen gesteuert werden.

Es ist besonders bevorzugt, dass die Steuereinrichtung im Bereich der Kupplung angeordnet ist. Die Steuereinrichtung kann dazu eingerichtet sein, die Kupplung in einer vorbestimmten Weise zu steuern, sodass eine Gefahr der Verwendung ungünstiger Parameter oder Charakteristika verringert sein kann. Außerdem kann ein Verbindungs- oder Verkabelungsaufwand der Kupplung mit der Steuereinrichtung an einem Einsatzort der Kupplung stark vermindert sein. So kann ein stabiles und exaktes Verhalten der hydrodynamischen Kupplung unabhängig von einer externen Steueranforderung unter allen Betriebsbedingungen sichergestellt werden. Die Kupplung kann schneller und sicherer vor Ort in Betrieb genommen werden. Eine Schnittstelle, über die eine Steueranforderung von einer externen Logik entgegengenommen werden kann, kann vereinfacht sein.

In einer weiteren Ausführungsform des Kupplungssystems ist im Direktumlauf ein Wärmetauscher angeordnet, wobei die Kupplung einen Ventilator zur Belüftung des Wärmetauschers umfasst und die Steuereinrichtung zur Steuerung des Ventilators eingerichtet ist. Der Wärmetauscher und der Ventilator können vom Kupplungssystem umfasst oder separat vorgesehen sein.

Eine füllungsgesteuerte hydrodynamische Kupplung umfasst ein Pumpenrad und ein Turbinenrad, die einen Arbeitsraum begrenzen und mittels eines hydraulischen Fluids mechanisch miteinander gekoppelt werden können; einen Direktumlauf, der einen hydraulischen Auslass des Arbeitsraums mit einem hydraulischen Einlass des Arbeitsraums verbindet; eine Pumpeinrichtung, die hydraulisch zwischen einer Fluidquelle und dem Direktumlauf angeordnet ist; und eine Schmierleitung, die von der Pumpeinrichtung zu einer Schmierstelle der Kupplung führt. Ein Verfahren zum Steuern der füllungsgesteuerten hydrodynamischen Kupplung umfasst Schritte des Betreibens der Pumpeinrichtung in einer ersten Förderrichtung, um die Schmierstelle und den Arbeitsraum mit Fluid zu versorgen; und des Betreibens der Pumpeinrichtung in einer zweiten Förderrichtung, um die Menge des im Arbeitsraum aufgenommenen Fluids zu verringern.

In einer weiteren Ausführungsform ist bevorzugt, dass die Pumpeinrichtung in der ersten Förderrichtung mit einem hohen Volumenstrom betrieben wird, um die Menge des im Arbeitsraum aufgenommenen Fluids zu erhöhen, oder mit einem niedrigen Volumenstrom, um die Menge des im Arbeitsraum aufgenommenen Fluids konstant zu halten. Der hohe Volumenstrom ist größer als der niedrige Volumenstrom. Zur Förderung des hohen Volumenstroms kann die Pumpeinrichtung mit maximaler Antriebsleistung betrieben werden, sodass der hohe Volumenstrom dem maximal förderbaren Volumenstrom entspricht oder nahe kommt. Der niedrige Volumenstrom ist bevorzugt so gering, dass er betragsmäßig der Summe aus Leckagen von Fluid aus dem Arbeitsraum und dem durch die Schmierstellen fließenden Volumenstrom an Fluid entspricht. Anders ausgedrückt ist der niedrige Volumenstrom erreicht, wenn die Menge an im Arbeitsraum aufgenommenen Fluids gleich bleibt.

Wie viel Fluid im Arbeitsraum vorliegen soll, kann insbesondere in Abhängigkeit einer Anforderung eines zu übertragenden Drehmoments, einer zu erzielenden Drehzahl oder eines einzuhaltenden Schlupfs zwischen dem Pumpenrad und dem Turbinenrad bestimmt werden.

In noch einer weiteren Ausführungsform wird die Pumpeinrichtung in der ersten Förderrichtung gepulst betrieben, um die Schmierstelle mit Fluid zu versorgen, während der Schlupf zwischen dem Pumpenrad und dem Turbinenrad ca. 100 % beträgt. So kann ein dauerhafter Betrieb der Kupplung auch bei extrem hohen Schlupfraten sichergestellt werden, ohne die Versorgung der Schmierstelle mit Fluid zu gefährden. Ein Schlupf von 100 % stellt sich üblicherweise ein, wenn eine Eingangsseite, die mit dem Pumpenrad verbunden ist, gedreht wird, während eine Ausgangsseite, die mit dem Turbinenrad verbunden ist, im Wesentlichen stillsteht. Ist die Kupplung nur mit einem gasförmigen Medium gefüllt, so wird gepulst etwas Fluid in den Arbeitsraum eingebracht und wieder abgeführt, um die entstehende Ventilationswärme abzuführen.

Das beschriebene Verfahren kann als Computerprogrammprodukt mit Programmcodemitteln auf einer Verarbeitungseinrichtung ablaufen oder auf einem computerlesbaren Datenträger gespeichert sein. Die Verarbeitungseinrichtung kann von der oben erwähnten Steuereinrichtung umfasst oder mit ihr identisch sein. Es ist bevorzugt, dass die Verarbeitungseinrichtung einen programmierbaren Mikrocomputer oder Mikrocontroller umfasst.

Die Merkmale des beschriebenen Verfahrens beziehen sich unmittelbar auf die weiter oben beschriebene Vorrichtung, sodass Merkmale, die bezüglich einer der beiden Kategorien genannt sind, in übertragener Weise auch für die andere Kategorie gelten.

Die Erfindung wird nun mit Bezug auf die beigefügten Figuren genauer beschrieben, in denen:
- Fig. 1: eine schematische Darstellung eines Kupplungssystems;
- Fig. 2: einen Hydraulikschaltplan eines Kupplungssystems in einer weiteren Ausführungsform;
- Fig. 3: Ansichten einer exemplarischen Ausführungsform eines Kupplungssystems;
- Fig. 4: ein Blockschaltbild eines Kupplungssystems; und
- Fig. 5: ein Ablaufdiagramm eines Verfahrens zum Steuern einer Kupplung eines Kupplungssystems darstellt.

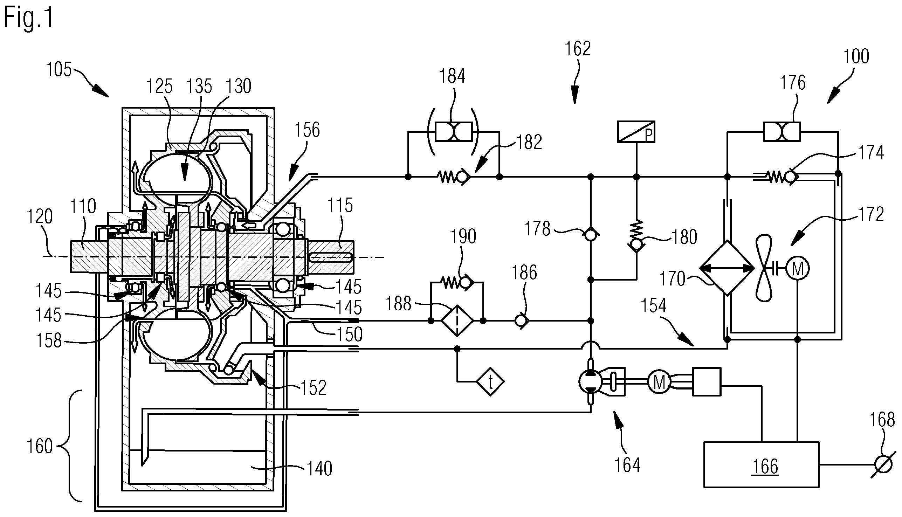

Figur 1 zeigt eine schematische Darstellung eines Kupplungssystems 100 mit einer füllungsgesteuerten hydrodynamischen Kupplung 105. Die Kupplung 105 ist zur steuerbaren Übertragung einer Drehbewegung zwischen einer Eingangsseite 110 und einer Ausgangsseite 115 eingerichtet, die um eine gemeinsame Drehachse 120 drehbar gegeneinander gelagert sind. Die Kupplung 105 umfasst ein Pumpenrad 125, das mit der Eingangsseite 110 verbunden ist, und ein Turbinenrad 130, das mit der Ausgangsseite 115 verbunden ist. Das Pumpenrad 125 bildet mit dem Turbinenrad 130 einen Arbeitsraum 135, in dem ein Fluid 140 aufgenommen werden kann, um das Turbinenrad 130 mit dem Pumpenrad 125 hydrodynamisch zu koppeln. Dabei ist der Grad der Kopplung von der Menge des im Arbeitsraum 135 aufgenommenen Fluids 140 abhängig. Das Pumpenrad 125 und das Turbinenrad 130 sind üblicherweise mittels Lagern 145 drehbar gelagert. Zur Versorgung der Lager 145 mit Fluid 140 ist eine Schmierleitung 150 vorgesehen. Das Fluid 140 kann eine wässrige oder eine ölige Flüssigkeit umfassen.

In einem radial äußeren Bereich des Arbeitsraums 135 ist ein Auslass 152 vorgesehen, der mittels eines Direktumlaufs 154 mit einem Einlass 156, der sich radial weiter innen am Arbeitsraum 135 befindet, hydraulisch verbunden ist. In bekannter Weise ist bevorzugt im Bereich des Auslasses 152 eine Staudruckpumpe gebildet, indem am Pumpenrad 125 radial außen eine Fangrinne für Fluid 140 vorgesehen ist, und ein Sammelrohr, das mit dem Auslass 152 verbunden ist, in Fluid 140 eintaucht, das sich unter der Wirkung von Fliehkraft in der Rinne ansammelt.

Es ist bevorzugt, dass am Arbeitsraum 135 noch eine oder mehrere weitere Auslässe 158 vorgesehen sind, die permanent geöffnet sind, um Fluid 140 aus dem Arbeitsraum 135 zu entlassen. Fluid 140, das aus dem Arbeitsraum 135 oder aus einem der Lager 145 austritt, wird bevorzugt gesammelt und in einen Tank 160 geführt, der als Fluidquelle dient. Der Tank 160 kann unterhalb des Arbeitsraums 135 oder an einer anderen Stelle angeordnet sein. Gegebenenfalls ist eine separate Pumpe zur Förderung von aufgefangenem Fluid 140 in den Tank 160 nach dem Trockensumpf-Prinzip erforderlich.

Das Kupplungssystem 100 umfasst neben der Kupplung 105 ein hydraulisches System 162, eine Pumpeinrichtung 164 und eine Steuervorrichtung 166. Die Steuervorrichtung 166 umfasst bevorzugt eine Schnittstelle 168 zur Kommunikation mit einer externen Vorrichtung und ist insbesondere dazu eingerichtet, eine Förderrichtung der Pumpeinrichtung 164 und bevorzugt auch einen Volumenstrom der Pumpeinrichtung 164 zu steuern. Dazu umfasst die Pumpeinrichtung 164 bevorzugt eine Pumpe und einen Elektromotor, wobei die Steuereinrichtung 166 den Elektromotor in Drehrichtung und Drehgeschwindigkeit steuern kann.

Die Pumpeinrichtung 164 ist in der dargestellten Ausführungsform einerseits mit dem Tank 160 und andererseits sowohl mit der Schmierleitung 150 als auch mit dem Einlass 156 hydraulisch verbunden. In einer ersten Förderrichtung fördert die Pumpeinrichtung 164 Fluid 140 aus dem Tank 160 in die Schmierleitung 150 und den Einlass 156.

In der dargestellten Ausführungsform verläuft der Direktumlauf 154 durch einen Wärmetauscher 170, der bevorzugt mittels eines Ventilators 172 aktiv belüftet werden kann. Eine Steuerung des Ventilators 172 kann mittels der Steuervorrichtung 166 erfolgen. Parallel zum Wärmetauscher 170 können ein Bypassventil 174 und/oder eine Blende 176 geschaltet sein. Ohne den Einfluss der Pumpeinrichtung 164 wird der Wärmetauscher 170 im Direktumlauf 154 in der Darstellung von Figur 1 von unten nach oben durchströmt. Der zweite Anschluss der Pumpeinrichtung 164 ist in einem Bereich des Direktumlaufs154 angeschlossen, der zwischen dem Wärmetauscher 170 und dem Einlass 156 liegt. Ein Rückschlagventil 178 ermöglicht einen Fluss von Fluid 140 aus diesem Bereich zur Pumpeinrichtung 164. Ein Bypassventil 180 ermöglicht den Fluss in Gegenrichtung. Der Freigabedruck des Bypassventils liegt bei ca. 1,5bar. Dieses Bypassventil ist für die Bereitstellung eines ausreichenden Schmieröldruckes vorgesehen. Von dieser Stelle zum Einlass 156 kann ein weiteres Bypassventil 182 vorgesehen sein, das optional mit einer Blende 184 parallel geschaltet sein kann, um einen durchgehenden Standbybetrieb zu ermöglichen. Ein Freigabedruck des Bypassventils 182 kann bei ca. 0,7 Bar liegen.

Die zweite Seite der Pumpeinrichtung 164 führt außerdem zur Schmierleitung 150, wobei in diese Verbindung ein Rückschlagventil 186 sowie bevorzugt ein Filter 188 mit optional parallel geschaltetem Bypassventil 190 angeordnet sein kann.

Zur verbesserten Steuerung können einer oder mehrere Temperatursensoren 192 und/oder einer oder mehreren Drucksensoren 194 an unterschiedlichen Stellen des hydraulischen Systems 162 angeordnet sein. Die Sensoren 192, 194 können mit der Steuervorrichtung 166 verbunden sein. Weitere mögliche Sensoren können einen Drehzahlsensor der Ausgangsseite 115, einen Ölstandsensor oder einen Verstopfungssensor des Filters 188 umfassen.

Zur weiteren Erklärung der Funktionsweise des Kupplungssystems 100 wird exemplarisch davon ausgegangen, dass die Eingangsseite 110 mit einer konstanten Geschwindigkeit gedreht wird, während sich im Arbeitsraum 135 zunächst kein Fluid 140 befindet und die Ausgangsseite 115 stillsteht. Zur Herstellung einer mechanischen Kopplung der Ausgangsseite 115 mit der Eingangsseite 110 wird die Pumpeinrichtung 164 angesteuert, in der ersten Förderrichtung Fluid 140 aus dem Tank 160 in Richtung des Einlasses 156 zu fördern. Dabei wird die Pumpeinrichtung 164 möglichst auf den maximal verfügbaren Volumenstrom gesteuert, um ein rasches Füllen des Arbeitsraums 135 zu ermöglichen. Ein Teil des von der Pumpeinrichtung 164 geförderten Fluids 140 wird an die Schmierleitung 150 geführt, sodass während des Füllvorgangs des Arbeitsraums 135 die Versorgung der Lager 145 mit Fluid 140 gesichert ist.

Ist der Arbeitsraum 135 gefüllt, so drehen sich nach einer gewissen Anlaufzeit die Eingangsseite 110 und die Ausgangsseite 115 mit vergleichbaren Drehzahlen. Die Pumpeinrichtung 164 kann dann mit einem verringerten Volumenstrom betrieben werden, der bevorzugt gerade so groß ist, dass das durch die Schmierleitung 150 und gegebenenfalls durch den weiteren Auslass 158 entweichende Fluid 140 wieder nachgefüllt wird.

Soll die Kopplung zwischen der Eingangsseite 110 und der Ausgangsseite 115 aufgehoben werden, so wird die Pumpeinrichtung 164 dazu angesteuert, in einer zweiten Förderrichtung Fluid 140 aus dem Direktumlauf 154 zurück in den Tank 160 zu fördern. Der Kraftschluss zwischen der Eingangsseite 110 und der Ausgangsseite 115 wird dadurch aufgehoben. Dabei wird bevorzugt wieder ein großer Volumenstrom bewirkt, um die Kupplung 105 möglichst rasch zu trennen.

Soll die Kupplung 105 länger mit einem Schlupf von ca. 100 % betrieben werden, beispielsweise wenn die Eingangsseite 110 angetrieben wird und die Ausgangsseite 115 stillsteht, so kann die Pumpeinrichtung 164 in der ersten Förderrichtung gepulst betrieben werden. Mit jedem Puls wird Fluid 140 in die Schmierleitung 150 gebracht. Ein gewählter Fluidstand im Arbeitsraum 135 kann dabei im zeitlichen Mittel konstant gehalten werden. Für eine Aufrechterhaltung einer Teilfüllung ist dann erforderlich, dass die Pumpe in der zweiten Förderrichtung ebenfalls gepulst betrieben wird, um auch wieder Fluid aus dem Arbeitsraum abzuführen. Diese Betriebsart mit einem gepulsten Betrieb in der ersten und der zweiten Förderrichtung kann auch bei geringeren Schlupfraten vorgesehen sein. Hohe Schlupfwerte können dadurch bei beliebigen Füllgraden der Kupplung 105 praktisch beliebig lang aufrechterhalten werden.

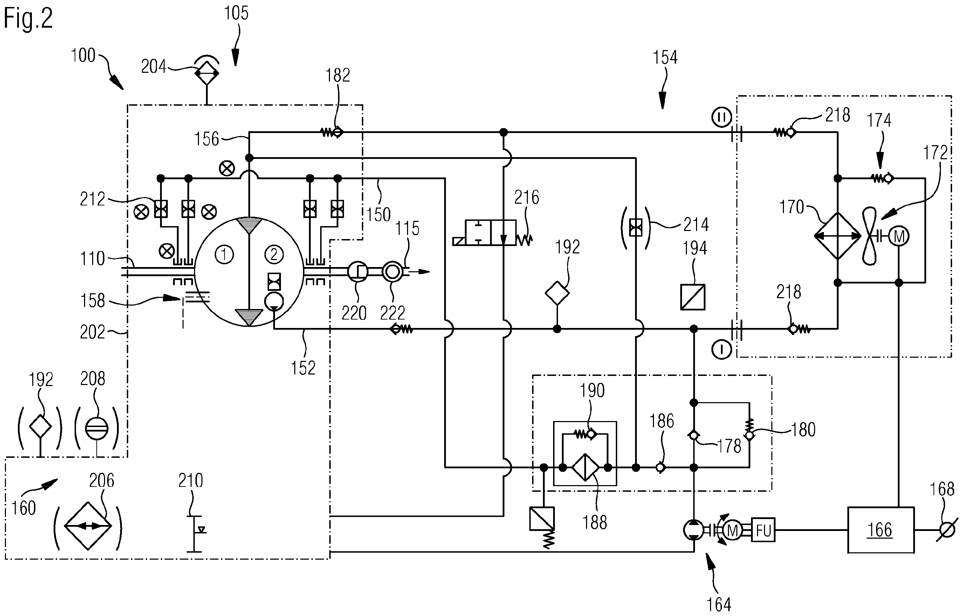

Figur 2 zeigt einen Hydraulikschaltplan eines Kupplungssystems 100 entsprechend dem von Figur 1 in einer weiteren Ausführungsform. Elemente, die mit einem Kreuz in einem Kreis markiert sind, können in bestimmten Ausführungsformen entfallen. Ansonsten sind die gezeigten Elemente und Merkmale entsprechend auf die in Figur 1 dargestellte Ausführungsform übertragbar und umgekehrt.

Exemplarisch ist die Kupplung 105 in einem Gehäuse 202 aufgehoben, an dem eine Belüftung 204 vorgesehen sein kann. Im Bereich des Tanks 160 können eine Heizeinrichtung 206, insbesondere ein Heizstab, ein Temperatursensor 192 und/oder ein Niveauschalter 208 angebracht sein. Außerdem kann ein Schauglas 210 zur Fluidstandskontrolle angebracht sein. Zwischen der Schmierleitung 150 und den Lagern 145 können jeweils Blenden 212 angeordnet sein.

Die dargestellte Ausführungsform unterscheidet sich wesentlich von der Ausführungsform von Figur 1 dadurch, dass die Pumpeinrichtung 164 am Direktumlauf 154 im Bereich zwischen dem Auslass 152 und dem Wärmetauscher 170 statt zwischen dem Wärmetauscher 170 und dem Einlass 156 angeschlossen ist. Eine zusätzliche Leitung führt von einer Stelle zwischen dem Rückschlagventil 186 und dem Filter 188 zum Einlass 156, und zwar bevorzugt stromabwärts des Rückschlagventils 186. In diese Leitung kann eine Blende 214 eingefügt sein. Außerdem ist bevorzugt ein steuerbares 2/2-Wegeventil 216 zwischen dem Direktumlauf 154 und dem Tank 160 vorgesehen. Wird das Ventil 216 geöffnet, so besteht eine direkte fluide Verbindung zwischen der stromabwärtigen Seite des Wärmetauschers 170 und dem Tank 160. Ein oder zwei Bypassventile 218 sind vorgesehen, um die Entleerung des Wärmetauschers in den Tank zu verhindert, wenn der Wärmetauscher oberhalb des maximalen Ölspiegels im Tank angeordnet ist.

An der Ausgangsseite 115 können ein Drehmomentsensor 220 und/oder ein Drehzahlsensor 222 angebracht sein.

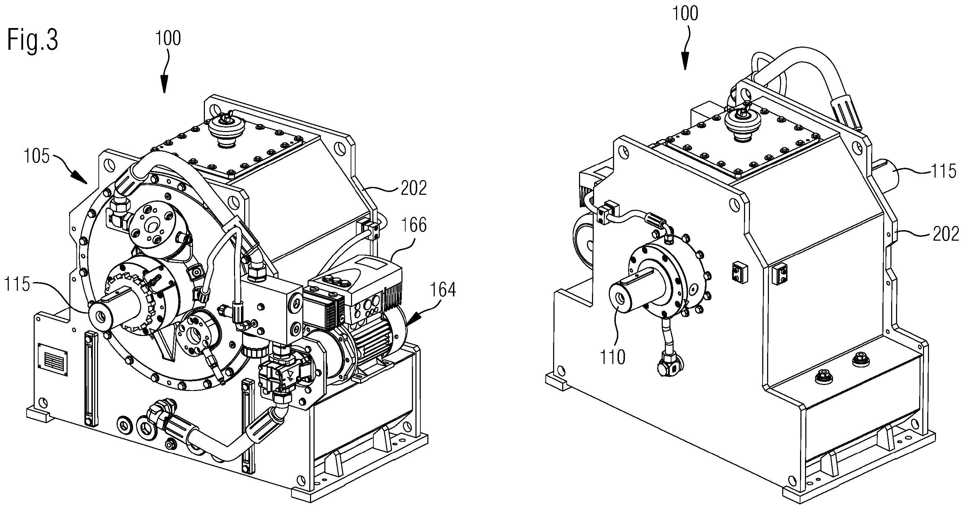

Figur 3 zeigt Ansichten einer exemplarischen Ausführungsform eines Kupplungssystems 100. Der dargestellte Typ ist bekannt unter der Bezeichnung Turbo Belt 500 und basiert auf dem Typ VTK 492 DTPXLKL. Dabei steht VTK für Voith Turbokupplung; 492 gibt den Außendurchmesser in mm an; D zeigt an, dass zwei Pumpenräder 125 und zwei Turbinenräder 130 jeweils parallel geschaltet sind (die Pumpenräder liegen axial zwischen den Turbinenrädern); TP steht für eine füllungsgesteuerte Kupplung 105; XL zeigt die Verwendung eines speziell geformten Arbeitsraums 135 mit vergrößertem Volumen an; und KL mit einer eigengelagerten Eingangs- und Ausgangsseite zeigt in Verbindung mit TP an, dass der Tank 160, hydraulische Ventile und eine aktive Kühlung an der Kupplung 105 vorgesehen sind. Die Kupplung 105 kann beispielsweise vorteilhaft zum Antrieb eines Gurtförderers eingesetzt werden.

Im linken Bereich von Figur 3 ist eine isometrische Ansicht der Kupplung 105 von links und im rechten Bereich eine weitere von rechts dargestellt. Die Pumpeinrichtung 164 und die Steuervorrichtung 166 sind hier an der linken Seite des Kupplungssystems 100 angebracht, in einer anderen Ausführungsform können diese Elemente auch auf der gegenüberliegenden, rechten Seite vorgesehen sein. Es ist bevorzugt, dass die Steuereinrichtung 166 im Bereich des Kupplungssystems 100 bzw. der Kupplung 105 angebracht ist. Insbesondere kann die Steuervorrichtung 166 unmittelbar an der Pumpeinrichtung 164 bzw. einem diese antreibenden Elektromotor angebracht sein. Nicht in Figur 3 dargestellt ist der Wärmetauscher 170, der bevorzugt entfernt aufgestellt und mittels Leitungen mit dem Kupplungssystem 100 verbunden wird.

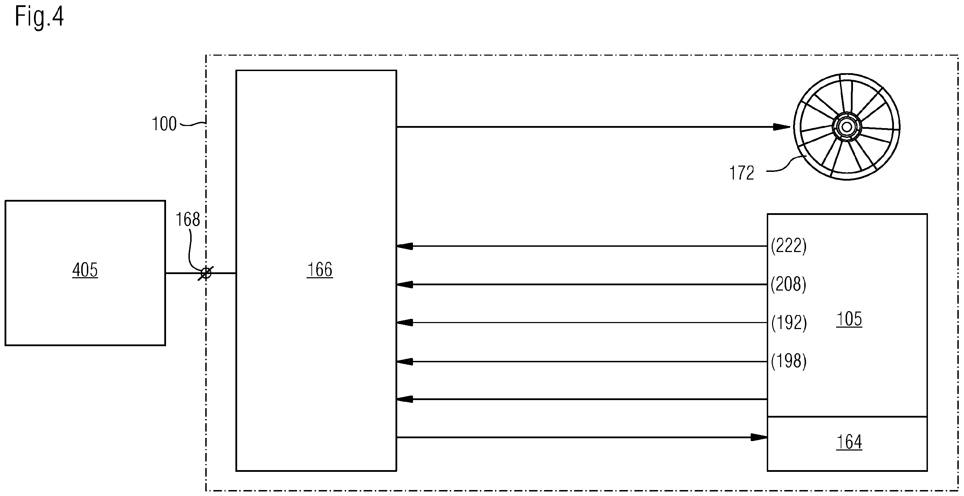

Figur 4 zeigt ein Blockschaltbild eines Kupplungssystems 100. Das Kupplungssystem 100 kann mittels der Schnittstelle 168 mit einer externen Steuervorrichtung 405 verbunden werden. Die Steuervorrichtung 405 kann insbesondere eine speicherprogrammierbare Steuerung (auch Programmable Logic Controller, PLC genannt) umfassen, die üblicherweise einen Prozess steuert, der das Koppeln von Drehbewegungen zwischen der Eingangsseite 110 und der Ausgangsseite 115 der Kupplung 105 umfasst, beispielsweise das Fördern von Material mittels eines Gurtförderers, wobei ein Antriebsmotor über die Kupplung 105 auf eine Antriebsrolle eines Fördergurts wirkt. Über die Schnittstelle 168 können insbesondere Parameter ausgetauscht werden, die Sollwerte wie eine Drehzahl oder ein Drehmoment an der Ausgangsseite 115 umfassen. Die Steuervorrichtung 166 ist bevorzugt dazu eingerichtet, alle weiteren Vorgänge innerhalb des Kupplungssystems 100 den Vorgaben und gegebenenfalls internen Betriebsparametern entsprechend zu steuern. Über die Schnittstelle 168 kann auch eine standardisierte Rückmeldung über Betriebs- oder Fehlerzustände bereitgestellt werden.

Die Steuervorrichtung 166 ist bevorzugt dazu eingerichtet, die Pumpeinrichtung 164 anzusteuern, wie oben ausführlich beschrieben wurde. Darüber hinaus kann auch der Ventilator 172 in Abhängigkeit von Betriebsparametern des Kupplungssystems 100 durch die Steuervorrichtung 166 angesteuert werden. Betriebsparameter, die von der Kupplung 105 abgenommen werden, können eine Drehzahl des Drehzahlsensors 222, einen Fluidstand des Niveauschalters 208, eine Fluidtemperatur des Temperatursensors 192 oder ein Verstopfungssignal eines Sensors für den Filter 188 umfassen. Weitere Signale weiterer oder anderer Sensoren sind ebenfalls möglich.

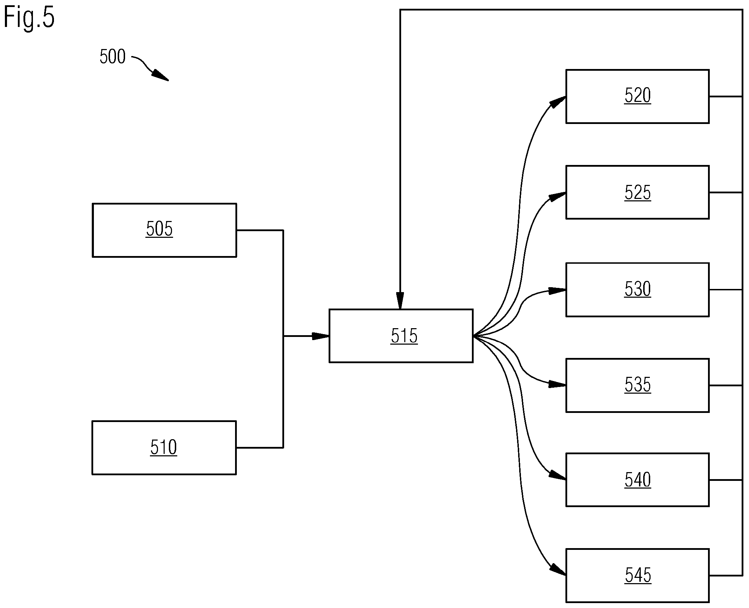

Figur 5 zeigt ein Ablaufdiagramm eines Verfahrens 500 zum Steuern einer Kupplung 105 eines Kupplungssystems 100. Das Verfahren 500 kann insbesondere wenigstens teilweise auf der Steuervorrichtung 166 oder auf einer von ihr umfassten Verarbeitungseinrichtung ablaufen.

In einem Schritt 505 kann ein Parameter über die Schnittstelle 168 entgegengenommen werden. In einem Schritt 510 können Parameter der Kupplung 105 bestimmt werden. Die Schritte 505 und 510 können nebenläufig zu den restlichen Schritten ablaufen, beeinflussen aber im Allgemeinen die weitere Ausführung.

In einem Schritt 515 kann auf der Basis der bestimmten oder abgetasteten Parameter ein Betriebsmodus bestimmt werden. Ein erster Betriebsmodus 520 betrifft das Füllen der Kupplung 105 mit Fluid 140. Dazu wird die Pumpeinrichtung 164 dazu angesteuert, in der beschriebenen ersten Förderrichtung mit einem hohen Volumenstrom zu fördern.

Ein zweiter Betriebsmodus 525 betrifft das Konstanthalten der Menge von Fluid 140, die im Arbeitsraum 135 der Kupplung 105 aufgenommen ist. Dazu wird die Pumpeinrichtung 164 bevorzugt dazu angesteuert, in der ersten Förderrichtung mit einem geringen Volumenstrom zu fördern.

In einem dritten Betriebsmodus 530 wird Fluid 140 aus dem Arbeitsraum 135 der Kupplung 105 geleert. Dazu wird die Pumpeinrichtung 164 bevorzugt dazu angesteuert, in einer zweiten Förderrichtung zu fördern. Der Volumenstrom ist dabei üblicherweise möglichst groß.

Ein vierter Betriebsmodus 535 betrifft den gepulsten Betrieb. Dieser Betriebsmodus wird bevorzugt zur Unterstützung ausgedehnter Phasen des Betriebs der Kupplung 105 mit einem Schlupf im Bereich von ca. 100 % verwendet. Dabei wird die Pumpeinrichtung 164 im Wechsel in der ersten und der zweiten Förderrichtung betrieben. Ein Tastverhältnis des Pulsbetriebs und eine Periodendauer können an die vorliegende Kupplung 105 angepasst sein.

Ein fünfter Betriebsmodus 540 betrifft eine Stillstandskühlung. Dabei wird Fluid 140 gekühlt, während die Kupplung 105 selbst stillsteht. Mit Bezug auf Figur 2 kann dazu insbesondere die Pumpeinrichtung 164 dazu angesteuert werden, in der ersten Förderrichtung zu fördern, während gleichzeitig das Ventil 216 geöffnet wird, um aus dem Wärmetauscher 170 austretendes Fluid 140 direkt in den Tank 160 zu entlassen.

In einem sechsten Betriebsmodus 545 kann der Wärmetauscher 170 vorgeheizt werden. Dies kann bei sehr niedrigen Außentemperaturen, beispielsweise unterhalb von ca. - 20 °C, sinnvoll sein. Mit Bezug auf die Ausführungsform von Figur 1 kann die Pumpeinrichtung 164 dazu angesteuert werden, in der ersten Förderrichtung zu fördern, um Fluid 140 aus dem Tank 160 entgegen der üblichen Fließrichtung zwischen dem Auslass 152 und dem Einlass 156 durch den Wärmetauscher 170 zu pressen. Der Fluidstrom liegt dabei betragsmäßig bevorzugt zwischen dem hohen und dem niedrigen Fluidstrom.

Es ist zu beachten, dass die dargestellten Betriebsmodi 520 bis 545 lediglich exemplarisch sind und in anderen Ausführungsformen auch andere oder zusätzliche Betriebsmodi implementiert sein können. Außerdem können die beschriebenen Modi auch inhaltlich abgewandelt werden.

### Bezugszeichen

- 100: Kupplungssystem
- 105: füllungsgesteuerte hydrodynamische Kupplung
- 110: Eingangsseite
- 115: Ausgangsseite
- 120: Drehachse
- 125: Pumpenrad
- 130: Turbinenrad
- 135: Arbeitsraum
- 140: Fluid
- 145: Lager
- 150: Schmierleitung
- 152: Auslass
- 154: Direktumlauf
- 156: Einlass
- 158: weiterer Auslass
- 160: Tank (Fluidquelle)
- 162: hydraulisches System
- 164: Pumpeinrichtung
- 166: Steuervorrichtung
- 168: Schnittstelle
- 170: Wärmetauscher
- 172: Ventilator
- 174: Bypassventil
- 176: Blende
- 178: Rückschlagventil
- 180: Bypassventil
- 182: Bypassventil
- 184: Blende
- 186: Rückschlagventil
- 188: Filter
- 190: Bypassventil
- 192: Temperatursensor
- 194: Drucksensor
- 202: Gehäuse
- 204: Belüftung
- 206: Heizeinrichtung
- 208: Niveauschalter
- 210: Schauglas
- 212: Blende
- 214: Blende
- 216: Ventil
- 218: Bypassventil
- 220: Drehmomentsensor
- 222: Drehzahlsensor

- 405: externe Steuervorrichtung

- 500: Verfahren
- 505: Abtasten Parameter
- 510: Bestimmen Parameter
- 515: Bestimmen Betriebsmodus
- 520: Füllen (erster Betriebsmodus)
- 525: Halten (zweiter Betriebsmodus)
- 530: Leeren (dritter Betriebsmodus)
- 535: Pulsen (vierter Betriebsmodus)
- 540: Stillstandskühlung (fünfter Betriebsmodus)
- 545: Wärmetauscher vorheizen (sechster Betriebsmodus)

## Patentansprüche

1. Füllungsgesteuerte hydrodynamische Kupplung (105), umfassend:
- ein Pumpenrad (125) und ein Turbinenrad (130), die einen Arbeitsraum (135) begrenzen und mittels eines hydraulischen Fluids (140) mechanisch miteinander gekoppelt werden können;
- einen Direktumlauf (154), der einen hydraulischen Auslass (152) mit einem hydraulischen Einlass (156) des Arbeitsraums (135) verbindet;
- nur eine Pumpeinrichtung (164), die hydraulisch zwischen einer Fluidquelle (160) und dem Direktumlauf (154) angeordnet ist; und
- eine Schmierleitung (150), die von der Pumpeinrichtung (164) zu einer Schmierstelle (145) der Kupplung (105) führt;
- wobei im Direktumlauf (154) ein Wärmetauscher (170) angeordnet ist und die Pumpeinrichtung (164) hydraulisch zwischen dem Wärmetauscher (170) und dem Einlass (156) des Arbeitsraums (135) am Direktumlauf (154) angeschlossen ist und
- wobei die nur eine Pumpeinrichtung (164) dazu eingerichtet ist, sowohl in einer ersten Förderrichtung Fluid (140) von der Fluidquelle (160) in den Arbeitsraum (135) und in die Schmierleitung (150), als auch in einer zweiten Förderrichtung vom Arbeitsraum (135) zur Fluidquelle (160) zu fördern.

2. Kupplung (105) nach Anspruch 1, wobei die Pumpeinrichtung (164) dazu eingerichtet ist, den Betrag eines geförderten Volumenstroms zu variieren.

3. Kupplung (105) nach Anspruch 1 oder 2, ferner umfassend einen Tank als Fluidquelle (160), wobei aus dem Arbeitsraum (135) oder von der Schmierstelle (145) austretendes Fluid (140) in den Tank (160) geführt wird.

4. Kupplung (105) nach einem der vorangehenden Ansprüche, wobei der Arbeitsraum (135) einen weiteren, permanent geöffneten Auslass (158) für Fluid (140) umfasst.

5. Kupplung (105) nach einem der vorangehenden Ansprüche, ferner umfassend ein steuerbares Ablassventil zum Ablassen von Fluid (140) aus dem Arbeitsraum (135).

6. Kupplungssystem (100), umfassend eine Kupplung (105) nach einem der vorangehenden Ansprüche und eine Steuereinrichtung (166) zur Steuerung der Pumpeinrichtung (164).

7. Kupplungssystem (100) nach Anspruch 6, wobei die Steuereinrichtung (166) im Bereich der Kupplung (105) angeordnet ist und vorzugsweise in einem Motorregler der Pumpeneinrichtung (164) integriert ist.

8. Kupplungssystem (100) nach Anspruch 6 oder 7, wobei im Direktumlauf (154) ein Wärmetauscher (170) angeordnet ist, die Kupplung (105) einen Ventilator (172) zur Belüftung des Wärmetauschers (170) umfasst und die Steuereinrichtung (166) zur Steuerung des Ventilators (172) eingerichtet ist.

9. Kupplungssystem (100) nach einem der vorhergehenden Ansprüche, **dadurch gekennzeichnet, dass** ein Tank (160) vorgesehen ist, dessen Volumen das 1,1-fache bis das 1,5-fache, vorzugsweise das 1,1-fache bis 1,3-fache des maximalen Füllvolumen der Kupplung beträgt.

10. Verfahren (500) zum Steuern einer füllungsgesteuerten hydrodynamischen Kupplung (105), wobei die Kupplung (105) folgendes umfasst:
- ein Pumpenrad (125) und ein Turbinenrad (130), die einen Arbeitsraum (135) begrenzen und mittels eines hydraulischen Fluids (140) mechanisch miteinander gekoppelt werden können;
- einen Direktumlauf (154), der einen hydraulischen Auslass (152) des Arbeitsraums (135) mit einem hydraulischen Einlass (156) des Arbeitsraums (135) verbindet;
- nur eine Pumpeinrichtung (164), die hydraulisch zwischen einer Fluidquelle (160) und dem Direktumlauf (154) angeordnet ist; und
- eine Schmierleitung (150), die von der einen Pumpeinrichtung (164) zu einer Schmierstelle (145) der Kupplung (105) führt;
und wobei das Verfahren (500) folgende Schritte umfasst:
- Betreiben (520, 525) der nur einen Pumpeinrichtung (164) in einer ersten Förderrichtung, um die Schmierstelle (145) und den Arbeitsraum (135) mit Fluid (140) zu versorgen; und
- Betreiben (530) der nur einen Pumpeinrichtung (164) in einer zweiten Förderrichtung, um die Menge des im Arbeitsraum (135) aufgenommenen Fluids (140) zu verringern.

11. Verfahren (500) nach dem vorangehenden Verfahrensanspruch, wobei die Pumpeinrichtung (164) in der ersten Förderrichtung mit einem hohen Volumenstrom betrieben (520) wird, um die Menge des im Arbeitsraum (135) aufgenommenen Fluids (140) zu erhöhen, oder mit einem niedrigen Volumenstrom (530), um die Menge des im Arbeitsraum (135) aufgenommenen Fluids (140) konstant zu halten.

12. Verfahren (500) nach einem der vorangehenden Verfahrensansprüche, wobei die Pumpeinrichtung (164) in der ersten Förderrichtung gepulst betrieben (535) wird, um die Schmierstelle (145) mit Fluid (140) zu versorgen, während ein Schlupf zwischen dem Pumpenrad (125) und dem Turbinenrad (130) ca. 100 % beträgt.

13. Verfahren (500) nach einem der vorangehenden Verfahrensansprüche, wobei für eine Stillstandskühlung bei stillstehendem Pumpenrad (125) das Fluid in der ersten Förderrichtung durch den Wärmetauscher gefördert wird.

14. Computerprogrammprodukt mit Programmcodemitteln zur Durchführung des Verfahrens (500) nach einem der Ansprüche 10 bis 13, wenn das Computerprogrammprodukt auf einer Verarbeitungseinrichtung (166) abläuft oder auf einem computerlesbaren Datenträger gespeichert ist.

## Claims

1. Fill-controlled hydrodynamic coupling (105), comprising:
- a pump wheel (125) and a turbine wheel (130), which delimit a working space (135) and can be mechanically coupled to one another by means of a hydraulic fluid (140);
- a direct circulation (154), which connects a hydraulic outlet (152) to a hydraulic inlet (156) of the working space (135);
- only one pumping device (164), which is arranged hydraulically between a fluid source (160) and the direct circulation (154); and
- a lubricating line (150), which leads from the pumping device (164) to a lubricating point (145) of the coupling (105);
- wherein a heat exchanger (170) is arranged in the direct circulation (154), and the pumping device (164) is hydraulically connected to the direct circulation (154) between the heat exchanger (170) and the inlet (156) of the working space (135), and
- wherein the only one pumping device (164) is designed to deliver fluid (140) from the fluid source (160) into the working space (135) and into the lubricating line (150) in a first delivery direction and from the working space (135) to the fluid source (160) in a second delivery direction.

2. Coupling (105) according to Claim 1, wherein the pumping device (164) is designed to vary the amount of a delivered volumetric flow.

3. Coupling (105) according to Claim 1 or 2, further comprising a tank as fluid source (160), wherein fluid (140) exiting from the working space (135) or from the lubricating point (145) is guided into the tank (160).

4. Coupling (105) according to one of the preceding claims, wherein the working space (135) comprises a further, permanently opened outlet (158) for fluid (140) .

5. Coupling (105) according to one of the preceding claims, further comprising a controllable discharge valve for discharging fluid (140) from the working space (135).

6. Coupling system (100), comprising a coupling (105) according to one of the preceding claims and a control device (166) for controlling the pumping device (164).

7. Coupling system (100) according to Claim 6, wherein the control device (166) is arranged in the region of the coupling (105) and is preferably integrated in a motor controller of the pumping device (164).

8. Coupling system (100) according to Claim 6 or 7, wherein a heat exchanger (170) is arranged in the direct circulation (154), the coupling (105) comprises a fan (172) for ventilating the heat exchanger (170), and the control device (166) is designed for controlling the fan (172).

9. Coupling system (100) according to one of the preceding claims, **characterized in that** a tank (160) is provided whose volume is from 1.1 times to 1.5 times, preferably from 1.1 times to 1.3 times, the maximum filling volume of the coupling.

10. Method (500) for controlling a fill-controlled hydrodynamic coupling (105), wherein the coupling (105) comprises the following:
- a pump wheel (125) and a turbine wheel (130), which delimit a working space (135) and can be mechanically coupled to one another by means of a hydraulic fluid (140);
- a direct circulation (154), which connects a hydraulic outlet (152) of the working space (135) to a hydraulic inlet (156) of the working space (135) ;
- only one pumping device (164), which is arranged hydraulically between a fluid source (160) and the direct circulation (154); and
- a lubricating line (150), which leads from the one pumping device (164) to a lubricating point (145) of the coupling (105);
and wherein the method (500) comprises the following steps:
- operating (520, 525) the only one pumping device (164) in a first delivery direction in order to supply the lubricating point (145) and the working space (135) with fluid (140); and
- operating (530) the only one pumping device (164) in a second delivery direction in order to reduce the amount of fluid (140) received in the working space (135) .

11. Method (500) according to the preceding method claim, wherein the pumping device (164) is operated (520) with a high volumetric flow in the first delivery direction in order to increase the amount of fluid (140) received in the working space (135), or with a low volumetric flow (530) in order to keep the amount of fluid (140) received in the working space (135) constant.

12. Method (500) according to one of the preceding method claims, wherein the pumping device (164) is operated in a pulsed manner (535) in the first delivery direction in order to supply the lubricating point (145) with fluid (140), while a slip between the pump wheel (125) and the turbine wheel (130) is about 100%.

13. Method (500) according to one of the preceding method claims, wherein, for standstill cooling with the pump wheel (125) at a standstill, the fluid is delivered through the heat exchanger in the first delivery direction.

14. Computer program product having program code means for carrying out the method (500) according to one of Claims 10 to 13 if the computer program product is executed on a processing device (166) or is stored on a computer-readable data carrier.

## Revendications

1. Coupleur hydrodynamique (105) commandé par un remplissage, comprenant :
- une roue de pompe (125) et une roue de turbine (130) qui délimitent un espace de travail (135) et qui sont aptes à être reliées mécaniquement l'une à l'autre au moyen d'un fluide hydraulique (140) ;
- une circulation directe (154) reliant une sortie hydraulique (152) à une entrée hydraulique (156) de l'espace de travail (135) ;
- un dispositif de pompage (164) unique agencé hydrauliquement entre une source de fluide (160) et la circulation directe (154) ; et
- une conduite de lubrification (150) qui mène du dispositif de pompage (164) à un point de lubrification (145) du coupleur (105) ;
- un échangeur de chaleur (170) est agencé dans la circulation directe (154) et le dispositif de pompage (164) est raccordé hydrauliquement entre l'échangeur de chaleur (170) et l'entrée (156) de l'espace de travail (135) sur la circulation directe (154) et
- le dispositif de pompage (164) unique est adapté pour transporter du fluide (140) aussi bien dans une première direction de transport, depuis la source de fluide (160) dans l'espace de travail (135) et dans la conduite de lubrification (150), que dans une deuxième direction de transport, depuis l'espace de travail (135) vers la source de fluide (160).

2. Coupleur (105) selon la revendication 1, dans lequel le dispositif de pompage (164) est agencé pour faire varier la quantité d'un débit volumétrique refoulé.

3. Coupleur (105) selon la revendication 1 ou 2, comprenant en outre un réservoir en tant que source de fluide (160), le fluide (140) qui sort de l'espace de travail (135) ou du point de lubrification (145) étant guidé dans le réservoir (160).

4. Coupleur (105) selon l'une des revendications précédentes, dans lequel l'espace de travail (135) comprend une autre sortie (158) ouverte en permanence pour le fluide (140).

5. Coupleur (105) selon l'une des revendications précédentes, comprenant en outre une soupape de décharge apte à être commandée pour évacuer le fluide (140) hors de l'espace de travail (135).

6. Système d'accouplement (100), comprenant un coupleur (105) selon l'une des revendications précédentes et un dispositif de commande (166) pour commander le dispositif de pompage (164).

7. Système d'accouplement (100) selon la revendication 6, dans lequel le dispositif de commande (166) est agencé dans la zone du coupleur (105) et est de préférence intégré dans un régulateur de moteur du dispositif de pompage (164).

8. Système d'accouplement (100) selon la revendication 6 ou 7, dans lequel un échangeur de chaleur (170) est agencé dans la circulation directe (154), le coupleur (105) comprend un ventilateur (172) pour la ventilation de l'échangeur de chaleur (170) et le dispositif de commande (166) est conçu pour commander le ventilateur (172) .

9. Système d'accouplement (100) selon l'une des revendications précédentes, **caractérisé en ce qu'**il est prévu un réservoir (160) dont le volume est compris entre 1,1 fois et 1,5 fois, de préférence entre 1,1 fois et 1,3 fois le volume de remplissage maximal du coupleur.

10. Procédé (500) de commande d'un coupleur hydrodynamique (105) commandé par un remplissage, le coupleur (105) comprenant :
- une roue de pompe (125) et une roue de turbine (130) qui délimitent un espace de travail (135) et qui sont aptes à être reliées mécaniquement l'une à l'autre au moyen d'un fluide hydraulique (140) ;
- une circulation directe (154) reliant une sortie hydraulique (152) de l'espace de travail (135) à une entrée hydraulique (156) de l'espace de travail (135) ;
- un dispositif de pompage (164) unique, agencé hydrauliquement entre une source de fluide (160) et la circulation directe (154) ; et
- une conduite de lubrification (150) menant du dispositif de pompage (164) unique à un point de lubrification (145) du coupleur (105) ;
et dans lequel le procédé (500) comprend les étapes suivantes :
- faire fonctionner (520, 525) le dispositif de pompage (164) unique dans une première direction de pompage pour alimenter en fluide (140) le point de lubrification (145) et l'espace de travail (135) ; et
- faire fonctionner (530) le dispositif de pompage (164) unique dans une deuxième direction de pompage, pour réduire la quantité de fluide (140) reçue dans l'espace de travail (135).

11. Procédé (500) selon la revendication précédente, dans lequel le dispositif de pompage (164) est actionné (520) dans la première direction de pompage avec un débit volumique élevé pour augmenter la quantité de fluide (140) reçue dans l'espace de travail (135), ou avec un débit volumique faible (530), pour maintenir constante la quantité de fluide (140) reçue dans l'espace de travail (135) .

12. Procédé (500) selon l'une des revendications précédentes, dans lequel le dispositif de pompage (164) est actionné par impulsions (535) dans la première direction de pompage de façon à alimenter le point de lubrification (145) en fluide (140), tandis qu'un glissement entre la roue de pompe (125) et la roue de turbine (130) est d'environ 100 %.

13. Procédé (500) selon l'une des revendications précédentes, dans lequel, pour un refroidissement à l'arrêt lorsque la roue de pompe (125) est à l'arrêt, le fluide est transporté dans la première direction de pompage à travers l'échangeur de chaleur.

14. Produit de programme d'ordinateur avec des moyens de code de programme pour la mise en œuvre du procédé (500) selon l'une des revendications 10 à 13, lorsque le produit de programme d'ordinateur s'exécute sur un dispositif de traitement (166) ou est enregistré sur un support de données lisible par ordinateur.
